Europäisches Patentamt

European Patent Office

Office européen des brevets

(19)

(11) EP 0 740 691 B1

(12) FASCICULE DE BREVET EUROPEEN

(45) Date de publication et mention
de la délivrance du brevet:
**15.07.1998 Bulletin 1998/29**

(21) Numéro de dépôt: **95905687.0**

(22) Date de dépôt: **29.12.1994**

(51) Int Cl.6: **C09D 5/02**, C09D 133/14

(86) Numéro de dépôt international:
**PCT/FR94/01553**

(87) Numéro de publication internationale:
**WO 95/20016 (27.07.1995 Gazette 1995/32)**

(54) **LATEX ACRYLIQUES SUSCEPTIBLES DE FORMER DES FILMS PHOTORETICULABLES**

ACRYLLATEX ZUR BILDUNG PHOTOVERNETZBARER FILMS

PHOTOCURABLE FILM-FORMING ACRYLIC LATICES

(84) Etats contractants désignés:
**AT BE CH DE DK ES FR GB GR IE IT LI LU NL PT SE**

(30) Priorité: **20.01.1994 FR 9400599**

(43) Date de publication de la demande:
**06.11.1996 Bulletin 1996/45**

(73) Titulaire: **ELF ATOCHEM S.A.**
**92800 Puteaux, Hauts-de-Seine (FR)**

(72) Inventeurs:
• **COQUERET, Xavier**
**F-59133 Phalempin (FR)**
• **ROUSSEAU, Pierre**
**F-54100 Dombasle-sur-Meurthe (FR)**
• **VERGE, Christophe**
**F-27170 Beaumontel (FR)**

(56) Documents cités:
**US-A- 4 144 212**

• **PATENT ABSTRACTS OF JAPAN vol. 7 no. 290 (P-245) & JP,A,58 163937 (HITACHI KASEI KOGYO KK)**

**Description**

DOMAINE TECHNIQUE :

L'invention a trait aux latex acryliques susceptibles de former des films photoréticulables.

Les peintures latex traditionnelles font volontiers appel à des émulsions aqueuses de polymères ou copolymères acryliques qui par séchage progressif forment un film coalescé. On attend de ces peintures lorsqu'elles sont appliquées dans le bâtiment, en particulier en extérieur, une mise rapide hors poussière, puis un durcissement intéressant essentiellement la surface, tandis qu'on apprécie que les couches sous-jacentes conservent une certaine souplesse pour s'accommoder d'éventuelles imperfections du support (par exemple, microfissures dans un mur), accessoirement de manifester une bonne résistance aux salissures.

TECHNIQUE ANTERIEURE :

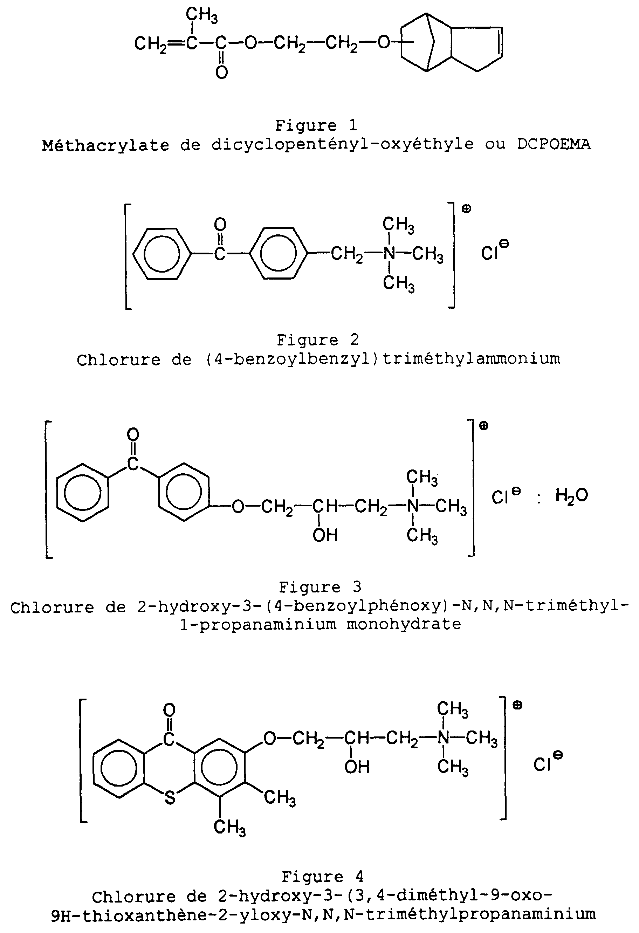

L'intérêt des spécialistes s'est porté vers des latex issus de la copolymérisation en émulsion de monomères $\alpha$, $\beta$-insaturés choisis de préférence de telle façon que le copolymère formé présente une température de transition vitreuse Tg qui soit inférieure à la température d'utilisation, afin qu'un film de polymère puisse se former par coalescence à cette température. La matière des films ainsi formés est une substance thermoplastique, et il est évidemment très avantageux de pouvoir mettre en oeuvre son post-durcissement par une réticulation après coalescence. Cette post-réticulation peut d'ailleurs aussi bien affecter les propriétés du copolymère par réticulation des chaînes polymères que participer à la cohésion du film par réticulation entre les particules déposées du latex. Différents modes de réticulation sont possibles. Il a semblé judicieux de faire appel à la photoréticulation puisqu'aussi bien il s'agit en l'occurrence de revêtements extérieurs, donc soumis à une irradiation U.V. naturelle. Cette photoréticulation, qui est un mécanisme de photo-polymérisation, consiste à faire intervenir un rayonnement lumineux ou électromagnétique pour induire la polymérisation de monomères fonctionnels, d'oligomères ou de polymères. L'énergie absorbée par le système est utilisée pour créer de nouveaux liens entre les molécules. La photoréticulation peut être menée en utilisant des photoamorceurs, des agents de réticulation et des polymères photoréticulables intrinsèquement. Dans des formulations déjà complexes comme celles des peintures, c'est la dernière solution qui s'impose pour raisons de commodité. Les latex que l'on se propose d'améliorer étant des latex de type acrylique, on a choisi d'incorporer dans la chaîne d'autres monomères porteurs d'une fonction méthacrylate, et possédant également une fonction réactive qui permettra d'induire des pontages lorsque le film de latex coalescé sera irradié, déjà connu de l'art antérieur, l'acrylate de dicyclopentényl-oxyéthyle, et préférentiellement le méthacrylate de dicyclopentényl-oxyéthyle ou DCPOEMA (fig 1).

Le DCPOEMA possède deux doubles liaisons ayant des réactivités a priori différentes. L'une d'elles est acrylique et se comporte pratiquement comme celle des monomères acryliques traditionnels. L'autre est cyclique et est réputée nettement moins réactive, mais susceptible de donner lieu à une post-réticulation grâce à un traitement approprié.

On a utilisé le DCPOEMA comme additif dans les latex pour revêtements en tant qu'agent de coalescence réactif (USP 4,097,677), plastifiant des particules de latex, agent abaissant la température minimale de formation de film et agent de siccativation en présence de sels métalliques. Il participe ainsi à la formation de films présentant une dureté élevée. On le trouve encore cité dans la publication européenne EP20125, employé comme comonomère optionnel dans des latex obtenus par polymérisation en émulsion, associé au (méth)acrylate d'isobornyle promoteur d'adhésion au polypropylène, où il joue un rôle de réticulant par auto oxydation. Des produits voisins, acrylate et méthacrylate de dicyclopentényl (DCPA et DCPMA) apparaissent également dans USP 4,144,212 comme comonomère fonctionnel dans des latex conduisant à des revêtements siccativables en présence de sels métalliques et présentant ainsi une bonne résistance au solvant. Le DCPOEMA est enfin récemment apparu (EP 478193) comme comonomère utilisable dans des latex "core-shell" résistant aux bases, où il est utilisé comme site d'accrochage entre le coeur et l'écorce des particules.

EXPOSE DE L'INVENTION :

On vient de trouver maintenant qu'il était possible de conférer aux films de latex de copolymères de DCPOEMA la propriété d'être photoréticulables, par addition de photoamorceurs au latex tel qu'issu de son obtention par polymérisation en émulsion. Il s'agit d'une opération très simple et d'une efficacité inattendue, puisque le photoamorceur se trouve introduit d'une part dans le milieu hétérogène à l'échelle microscopique que constitue le latex, et que de surcroît, le photoamorceur se trouve introduit au sein de la phase continue aqueuse, justement destinée à être éliminée dès le début du processus de séchage formateur du film à réticuler.

La présente invention consiste ainsi en des compositions de latex de copolymères de composés $\alpha$, $\beta$-insaturés et de méthacrylate de dicyclopentényl-oxyéthyle (DCPOEMA) contenant un photoamorceur. Dans ces compositions, la teneur en DCPOEMA peut être aussi élevée que 50% (exprimés par rapport à l'ensemble des copolymères); mais d'autre part, la réticulation est très sensible à la teneur en DCPOEMA qui peut être encore efficace dans les conditions de l'invention à des valeurs aussi basses que 0,01%.

On classe habituellement les photoamorceurs en photoamorceurs hydrosolubles et photoamorceurs organosolubles. Ce sont des produits connus de l'homme de l'art. Les photoamorceurs utiles pour l'invention sont ceux qui fonctionnent dans le domaine ultraviolet puisqu'ils sont destinés à provoquer la réticulation des films de copolymères de DCPOEMA sous lumière naturelle ou sous sources radiatives industrielles fonctionnant dans ce domaine de longueurs d'ondes. On les utilise pour l'invention à des dosages pondéraux par rapport au latex humide compris entre 0,01 et 5% On peut citer en ce qui concerne les photoamorceurs hydrosolubles utiles pour l'invention les dérivés ammonium quaternaires de la benzophénone ou de la thioxanthone tels que :

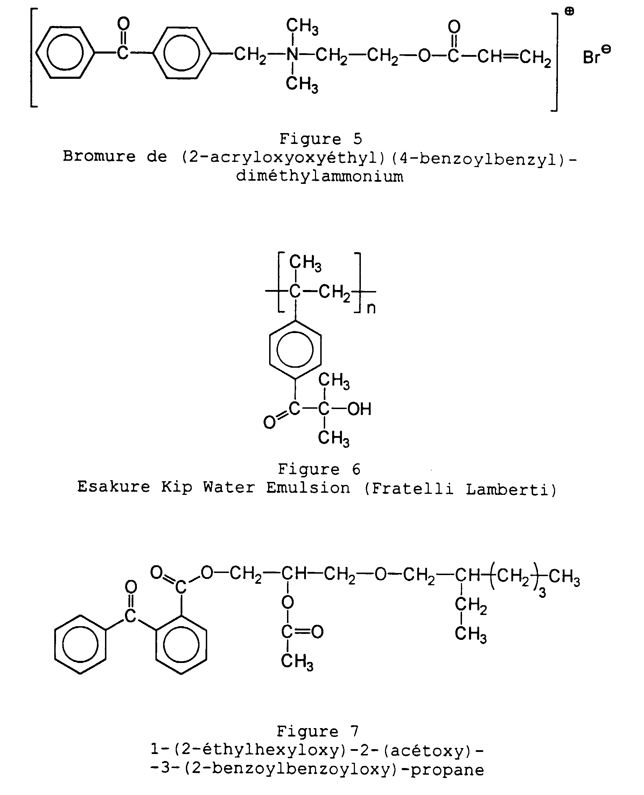

le chlorure de (4-benzoylbenzyl)triméthylammonium (fig. 2) ou Cantacure BTC de Octel Chemicals Limited;
le chlorure de 2-hydroxy-3-(4-benzoylphénoxy) - N,N,N-triméthyl-1-propanaminium monohydrate (fig. 3) ou Cantacure BPQ de Octel Chem., remarquable par sa bande d'absorption plus décalée vers le domaine visible, ce qui le rend très attrayant pour les formulations pigmentées;
le chlorure de 2-hydroxy-3- (3,4-diméthyl-9-oxo-9H-thioxanthène-2-yloxy-N,N,N-triméthylpropanaminium (fig.4) ou Cantacure QTX de Octel Chem., dont le maximum d'absorption est déplacé jusqu'à 400 nm. Il est utilisable à de faibles dosages, ce qui atténue son défaut principal de conférer une couleur jaune aux formulations qui le contiennent;
le bromure de (2-acryloxyoxyéthyl) (4-benzoylbenzyl) - diméthylammonium (fig.5) ou ABQ de Octel Chem, dont le groupe vinyle terminal permet la copolymérisation avec les autres constituants du copolymère, d'où résulte l'avantage d'un très faible taux de relargage après réticulation, et qui le cas échéant, pourrait même être introduit directement au cours de la synthèse du latex.

Ces dérivés quaternaires sont des poudres que l'on met en oeuvre après les avoir dissoutes dans un minimum d'eau distillée avant de les incorporer au latex.

Parmi les photoamorceurs organosolubles fonctionnant dans le domaine de longueurs d'onde des ultraviolets, figurent classiquement la benzophénone et la thioxanthone. Toutefois leur état cristallisé à température ambiante et leur hydrophobie les rendent peu pratiques pour les latex. On leur préfère à ce point de vue des benzophénones fonctionnalisées comme le 1- (2-éthylhexyloxy) -2- (acétoxy)-3 - (2-benzoylbenzoyloxy) -propane (fig.7), synthétisé d'après la thèse de L.Pouliquen (Lille 1991) et baptisé EHGE-BBA, qui a l'avantage d'être liquide à température ambiante. On préconise aussi des dérivés du type phényl-propanone substituée :

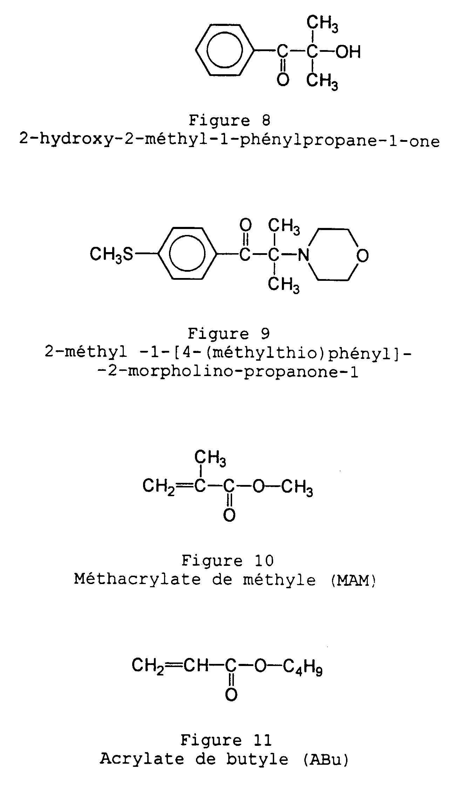

La 2-hydroxy-2-méthyl-1-phénylpropane-1-one (fig.8), commercialisée par Merck sous la marque Darocur 1173. C'est un liquide non miscible avec l'eau, mais soluble dans la plupart des solvants organiques, et qu'il est néanmoins possible d'introduire dans le latex sous agitation. Il a l'avantage de ne pas apporter de jaunissement aux revêtements. Il perd une partie de son efficacité par exposition trop prolongée à un rayonnement ultraviolet; un séchage des films sous un courant d'air chaud trop violent peut avoir les mêmes conséquences. Le dosage conseillé dans les formulations varie entre 0.5 et 5 %.

Un de ses dérivés s'est avéré très intéressant : l'oligomère de la 2-hydroxy-2-méthyl-1- [(4-isopropényl) -phénylpropane-1-one (fig.6). Comme d'autre amorceurs porteurs de groupes hydroxyacétophénones (ici ces groupes sont pendant le long de la chaîne oligomère), il a l'avantage de n'apporter qu'un très faible jaunissement aux revêtements. Il est commercialisé sous forme d'une émulsion sous le nom de Esakure Kip Water Emulsion par Fratelli Lamberti.

La 2-méthyl -1- [4- (méthylthio)phényl]-2-morpholino-propanone-1 (fig.9), commercialisée par Merck sous la marque Irgacure 907. Elle a la particularité d'avoir un coefficient d'extinction molaire élevé qui la rende apte à absorber le rayonnement incident, ce qui la fait apprécier dans la formulation des peintures chargées en $TiO_2$. On l'utilise après dissolution dans le minimum d'acétate de butyldiglycol.

Les latex de l'invention sont des suspensions de copolymères que l'on obtient par copolymérisation en émulsion de mélanges de comonomères $\alpha$, $\beta$-insaturés dont il est inutile de répéter une liste qu'on peut trouver dans tous les bons ouvrages (par exemple Polymer Handbook, 3rd Edition, Wiley Interscience) et de DCPOEMA. Les exemples rapportés plus loin citent de façon très usuelle et non limitative le méthacrylate de méthyle (MAM) (fig.10), et l'acrylate de butyle (ABu) (fig. 11), qui constituent un couple permettant de fixer aisément la température de transition vitreuse Tg du polymère final à des valeurs comprises entre -50°C et +100°C. On rappelle que l'on prévoit la température de transition vitreuse d'un copolymère par application de la loi de Fox

$$\frac{1}{Tg} = \sum_{i=1}^{n} \frac{x_i}{Tg_i}$$

où les $Tg_i$ sont les coefficients de température vitreuse attribués aux comonomères et exprimés en °K et où les $x_i$ sont leurs fractions massiques. On a pour le MAM, un Tg de + 105 °C, pour l'ABu un Tg de - 54 °C, et pour le DCPOEMA un Tg de -20°C.

On détermine la photosensibilité des films issus des latex selon l'invention à l'aide du test dit "photoresist négatif", un test classique en usage pour l'appréciation des résines pour microlithographie.

Le film de polymère photosensible est exposé sous une source lumineuse mono ou polychromatique par l'intermédiaire d'un système de cache. La partie du film ainsi irradiée dans un domaine de longueur d'onde déterminé réticule et devient insoluble. La partie non irradiée garde sa solubilité. Elle est donc éliminée par simple lavage par un solvant comme l'acétone. La partie restant collée au support peut éventuellement être révélée par un colorant.

La réalisation des tests se fait en trois étapes.

a) Dépôt du film sur une feuille de polyester. Le dépôt du film est fait à l'aide d'une réglette à spirale calibrée Braive de 25 µm d'épaisseur sur une feuille de polyester de 16 x 18 cm² de surface et de 75 µm d'épaisseur. Ce support est plaqué sur une tablette horizontale. La formulation photosensible liquide est déposée en long devant le filmographe puis est étalée rapidement sur toute la surface du support pour obtenir après évaporation de l'eau un film d'épaisseur la plus régulière possible. Après évaporation de l'eau au cours de la phase de coalescence des films de latex, l'épaisseur obtenue est de 12 à 14 µm (les latex synthétisés contiennent environ 50 % d'eau).

b) Exposition. Le support du film est découpé suivant les dimensions du cadre à glissière. Le cache est constitué de trous circulaires et permet, pour chaque opération, l'exposition de surfaces identiques pendant des temps différents. Les expositions sont effectuées à la même puissance pendant toute la durée de l'exposition à l'air libre et à la température ambiante (environ 18°C). On a dans les exemples utilisé une lampe au Xénon HANOVIA L 5 430 000 de 900 watts utilisée sous 40 ampères qui développe une puissance de 14 mW/cm2 à 254 nm et 82 mW/cm² à 365 nm.

c) Développement. Le film non irradié est éliminé très facilement du support par de l'acétone. Les parties du film suffisamment irradiées restent collées au support et sont visibles à l'oeil nu.

Détermination de la photosensibilité S.

La photosensiblité pratique S d'un polymère photoréticulable est définie comme étant inversement proportionnelle à l'énergie lumineuse minimale conduisant à la réticulation complète d'un film de ce polymère :

$$S = \frac{1}{E} = \frac{1}{It}$$

où E est l'énergie minimale nécessaire à l'insolubilisation complète de 1 cm² de polymère, I est l'éclairement énergétique reçu par le film de polymère en watt/cm² et t le temps nécessaire à la réticulation complète de la partie irradiée (secondes) . Le terme de l'insolubilisation se détermine visuellement par examen de la pastille irradiée. On peut raisonnablement accorder une marge d'erreur de 5 à 10 % sur les temps indiqués.

Peintures

Les peintures envisagées sont du type peintures pour façades, par principe appauvries en certains de leurs composants défavorables à l'encrassement, de façon à rendre plus significatif les tests de contrôle. Ces peintures contiennent en principe les ingrédients suivants:

(1) Epaississant cellulosique. Viscosant en milieu basique.
(2) Dispersant polyphosphate. "Mouillant". Stabilisant des particules hydrophobes en suspension dans l'eau.
(3) Bactéricide, fongicide.
(4) Dispersant acrylique. Stabilisant par mouillage des particules.
(5) Alcalinisant (en relation avec (1)).
(6) Antimousse. Suppression des bulles. Préventif ou curatif.
(7) $TiO_2$ de type rutile. Apporte opacité et blancheur. Particules très fines (diamètre moyen $F_m$< 1 µm). Charge.
(8) Particules de carbonate de calcium $CaCO_3$. Diamètre moyen $F_m$ = 5 µm. Charge.
(9) Particules de carbonate de calcium $CaCO_3$ Diamètre moyen $F_m$ = 10 µm. Charge.

L'utilisation de l'oxyde de titane $TiO_2$, grâce à ses particules très fines ($F_m$<1 µm), conduit à l'obtention de peintures brillantes. Les charges de $CaCO_3$ de 5 à 10 µm permettent de faire des peintures satinées ou mates. Par combinaison des trois types de pulvérulents (7), (8) et (9), on réalise des charges idéales comportant peu de vides et dont les particules roulent bien les unes sur les autres.

(10) Latex. Liant ; sa coalescence conduit à la formation du film de peinture.

(11) Agent de coalescence. Utile pour abaisser une Tg trop élevée. Généralement, butyldiglycol (BDG) ou butyldiglycol acétate (BDGA) .

(12) Epaississant polyuréthanne. Réglage de la viscosité finale de peinture et de l'élasticité et du tendu du film.

(13). Eau "de viscosité". Affinage de la viscosité finale.

Le mode de fabrication de la peinture est simple. Travailler dans un bêcher en inox et un disperseur muni d'une pale adéquate (ex : bêcher 500 ml + pale n° 55, ou bêcher 1000 ml + pale n° 70). L'ordre d'incorporation est très important. Ajouter (1) dans l'eau, sous agitation. Laisser gonfler 3 minutes. Ajouter (2), (3), (4), (5) et (6) . A part, mélanger (7), (8) et (9). Ajouter ces pulvérulents dans le mélange sous agitation. Refroidir dans un bain d'eau froide. Laisser sous agitation 20 minutes à 2000 tr/min. On obtient alors l'empâtage. Ajouter (10), (11) , (12) et (13) Mélanger 5 minutes. La peinture est prête.

Test de résistance à la salissure.

Ce test est destiné à chiffrer la réticulation superficielle des peintures, c'est-à-dire de films pigmentés et d'épaisseur relativement importante qui après irradiation vont présenter une surface durcie et un coeur souple. Le principe de ce test est simple. Après avoir appliqué un film de peinture sur un support, un séchage normalisé est effectué. Les plaques sont alors irradiées selon plusieurs procédés. Les revêtements sont ensuite salis artificiellement à l'aide d'une pâte pigmentée à base aqueuse (slurry) mais qui ne contient pas de liant. Après un temps de séchage fixé, les plaques sont nettoyées sous un courant d'eau claire. Le slurry s'enlève très facilement vu l'absence de liant. Les revêtements sont alors plus ou moins légèrement colorés. Vu le choix des pigments colorés composant le slurry, la teinte résiduelle est représentative d'une salissure naturelle. La différence des teintes avant et après application du slurry est mesurée à l'aide d'un spectrocolorimètre.

Le test tel que pratiqué ici comporte les étapes suivantes:

1) Application des peintures (200 μm au barcoater lisse à l'aide d'un applicateur automatique) sur plaques d'acier inox préalablement dégraissées à la MEC (méthyl éthyl cétone). Afin de vérifier la reproductibilité des tests, 3 essais sont effectués sur chacune des formulations.

2) Séchage (jusqu'à une semaine) dans les conditions standard (23°C, humidité relative H.R. de 50 % à 75 %).

3) Mesure au spectrocolorimètre des valeurs CIE : luminance L, indice de rouge a et indice de jaune b. Le spectrocolorimètre utilisé est de marque Hunterlab. L'illuminant utilisé est le D 65 (lumière du jour) à 10°. Le blanc standard porte la référence SN C5 240 avec les valeurs absolues suivantes : L=92.99, a=-1.11 et b=-0.72 .

4) Traitement photochimique : soit lumière solaire naturelle sur portoir extérieur, soit QUV : cycles de 4 heures d'UV 313 nm suivies de 4 heures d'humidité.

5) Séchage à l'air ambiant pendant une heure.

6) Application à la brosse d'un slurry composé d'un mélange d'oxydes de fer noir, jaune et rouge.

7) Séchage à l'air ambiant (jusqu'à 3 heures)

8) Séchage à l'étuve à 60 °C durant 1 heure.

9) Lavage à l'eau des plaques en frottant avec un papier doux jusqu'à ce que le papier reste propre.

10) Mesures au spectrocolorimétre des valeurs CIE L, a et b avant et après application du slurry. Calculs des variations dL, da et db.

MANIERES DE REALISER L'INVENTION :

Exemple 1 (Synthèse des latex)

La composition des différents latex synthétisés et la répartition des différents constituants sont les suivantes :

| Pied de cuve | |
|---|---|
| Eau déminéralisée | 45.5 parts |
| REWOPOL (WITCO) NOS 25 (35%) | 0.7 part |
| REWOPAL (WITCO) HV 25 (80%) | 0.6 part |

| Solution de métabisulfite | |
|---|---|
| Eau déminéralisée | 2.0 parts |
| Métabisulfite de sodium | 0.3 part |

| Préémulsion | |
|---|---|
| Eau déminéralisée | 41.7 parts |
| REWOPOL NOS 25 (35%) | 6.4 parts |
| REWOPAL HV 25 (80%) | 0.6 part |
| Monomères | 100.0 parts |

| Amorceur | |
|---|---|
| Eau déminéralisée | 6.0 parts |
| Persulfate d'ammonium | 0.3 part |

Les différents copolymères synthétisés ont été obtenus à partir des mélanges monomères donnés ci-après. A titre de contre-exemple, on a réalisé un latex dans lequel le DCPOEMA a été remplacé par son homologue hydrogéné, et donc ne disposant plus de la double liaison cyclique. Le DCPOEMA hydrogéné a été symbolisé par DCPOEMA h.

| Latex | A | B | C | D | E | F | G |
|---|---|---|---|---|---|---|---|
| MAM | 25.5 | 26.5 | 25.5 | 23.0 | 20.5 | 14.0 | 25.5 |
| ABU | 72.5 | 70.5 | 70.5 | 70.0 | 67.5 | 64.0 | 72.5 |
| AA | 1.0 | 1.0 | 1.0 | 1.0 | 1.0 | 1.0 | 1.0 |
| NMA | 1.0 | 1.0 | 1.0 | 1.0 | 1.0 | 1.0 | 1.0 |
| DCPOEMA | - | 1.0 | 2.0 | 5.0 | 10.0 | 20.0 | - |
| DCPOEMA h | - | - | - | - | - | - | 5.0 |

Le mode opératoire utilisé pour ces différentes synthèses est le suivant :

- Charger le pied de cuve du réacteur et mettre en chauffe pour atteindre 67°C, tout en préparant par ailleurs la préémulsion, la solution de métabisulfite de sodium et la solution d'amorceur.
- Introduire la solution de métabisulfite dans le réacteur.
- Couler séparément et simultanément la préémulsion et la solution d'amorceur en 4h30 en maintenant la température de réaction à 67 °C.
- Laisser réagir une heure supplémentaire à 67°C après la fin des coulées.
- Refroidir, et porter à pH 8.5 à l'aide d'ammoniaque 28%.

Les caractéristiques principales des latex synthétisés sont les suivantes :

| Latex | A | B | C | D | E | F | G |
|---|---|---|---|---|---|---|---|
| Extrait-sec (%) | 50.5 | 50.0 | 49.7 | 49.8 | 50.5 | 50.9 | 48.5 |
| pH | 8.5 | 8.5 | 8.5 | 8.5 | 8.5 | 8.5 | 8.5 |
| Diamètre (nm) | 175 | 140 | 135 | 140 | 125 | 130 | 170 |
| Tg (°C) | -13.7 | -13.9 | -12.9 | -14.1 | -10.5 | -9.5 | -17 |
| Monomères résiduels (ppm) | < 100 | < 100 | < 100 | < 100 | < 100 | 1000 | 6000 |

En l'absence de photoamorceurs, ces latex ne présentent pas de caractère photosensible.

Exemple 2

Dans cet exemple, on a vérifié sur une formulation du type vernis basée sur le latex D, l'efficacité de plusieurs photoamorceurs hydrosolubles ou organosolubles additivés en quantité variables au latex D. Les tests utilisés sont des tests de photoresists de type négatif.

Les films de latex humide ont une épaisseur de 25 μm. Au cours de la phase de coalescence, l'eau s'évapore, et comme elle constitue environ 50 % en masse de la dispersion, l'épaisseur du film après coalescence est d'environ la moitié de celle avant coalescence. Des mesures précises ont permis de déterminer une épaisseur moyenne de 12 à 14 μm.

Le degré de réticulation est évalué par un test de solubilité dans l'acétone de la zone irradiée sous une lampe HANNOVIA 900 watts.

L'efficacité des différents photoamorceurs est présentée dans le tableau suivant au travers du temps minimal exprimé en secondes d'obtention d'une zone irradiée parfaitement insoluble dans l'acétone et donc parfaitement réticulée.

| % | Darocur 1173 | Irgacure 907 | Esakure | BTC | ABQ | QTX | EHGE - BBA |
|---|---|---|---|---|---|---|---|
| 0 | 4 | 4 | 4 | 4 | 4 | 4 | 4 |
| 0.02 | - | 3 | - | - | - | - | - |
| 0.05 | 4 | 2.5 | - | - | - | - | - |
| 0.1 | 4 | 2.5 | 4.5 | - | - | - | 2.5 |
| 0.2 | 3 | 3.5 | 5.5 | - | - | - | - |
| 0.25 | - | - | - | - | 2.5 | 4 | 2.5 |
| 0.4 | - | - | - | - | - | - | 2.25 |
| 0.5 | 4 | 5 | 6 | 2.5 | 2 | 2.5 | - |
| 0.75 | - | - | 6 | 1.5 | 2 | 2 | 2.75 |
| 1 | 5 | 9 | 6 | 1.25 | 3 | 1.5 | - |
| 1.25 | - | - | - | 1 | - | - | - |
| 1.5 | - | - | - | 1.25 | 3 | - | 4.5 |
| 2 | 8 | 16 | 6 | 2.5 | - | 10 | 4.5 |
| 2.5 | - | - | 10 | - | - | - | - |
| 3 | - | - | 16 | - | - | - | - |
| 4 | 18 | - | 18 | 4 | - | 100 | - |

Les pourcentages indiqués sont des pourcentages massiques sur latex humides (pour obtenir les taux en photoamorceur sur les films coalescés, multiplier ces valeurs par 2). On observe que pour chaque photoamorceur expérimenté, il existe un pourcentage optimal qui conduit au temps de réticulation le plus court. Ce taux optimal a été exprimé en nombre de moles de photoamorceur pour une mole de DCPOEMA.

| | ETC | QTX | ABQ | EHGE-BBA | Irgacure 907 | Darocur 1173 | Esakure Emulsion |
|---|---|---|---|---|---|---|---|
| % optimal | 1.25 | 1 | 0.75 | 0.4 | 0.1 | 0.2 | 0.1 |
| t mini (secondes | 1 | 1.5 | 2 | 2.25 | 2.5 | 3 | 4 |
| n gén. rad. | 0.45 | 0.22 | 0.17 | 0.09 | 0.04 | 0.09 | 0.02 |

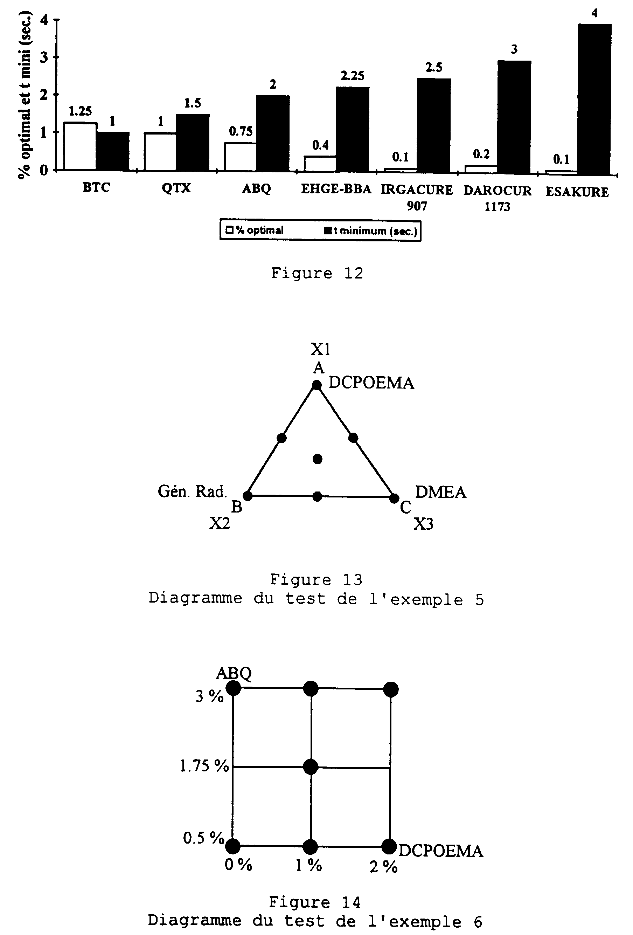

Ces résultats ont été transcrits sur la figure 12 qui met en évidence le temps nécessaire pour obtenir une bonne réticulation du revêtement. Plus ce temps est court, meilleure est la performance du photoamorceur correspondant. D'autre part, il est souhaitable que la concentration en photoamorceur soit la plus basse possible, ne serait-ce que pour des raisons économiques ou de toxicité. On voit que ce choix reste très ouvert à l'homme du métier.

Exemple 3

Il s'agit ici encore d'une application en vernis. L'intérêt du DCPOEMA a été vérifiée à l'aide du latex A (sans DCPOEMA) qui a été additivé de Cantacure BTC et comparé aux essais réalisés précédemment.

Les tests de photoresists de type négatif ont été réalisés exactement dans les mêmes conditions que les essais photochimiques effectués précédemment sur le latex D. Les résultats sont présentés dans le tableau suivant.

| % BTC | t (sec.) |
|-------|----------|
| 0 | 12 |
| 0.58 | 6 |
| 0.93 | 5 |
| 2.08 | 6 |
| 4.05 | 14 |

L'efficacité du système apparaît nettement moins efficace d'un facteur environ égal 5.

Exemple 4

L'intérêt du DCPOEMA a été vérifiée à l'aide du latex G (DCPOEMA h) qui a été additivé de Cantacure BTC et comparé aux essais réalisés précédemment, selon les mêmes tests de photoresists de type négatif.

Les résultats sont présentés dans le tableau ci-après.

| % BTC | t (sec.) |
|-------|----------|
| 0 | 8 |
| 0.53 | 6 |
| 0.99 | 7 |
| 1.99 | 8 |
| 4.04 | 16 |

L'efficacité du système apparaît nettement moins efficace d'un facteur environ égal 6.

Exemple 5 (Application peinture)

Il s'agit d'une évaluation sur une formulation peinture de l'efficacité de la réticulation par examen de la variation de luminance après application d'un slurry et nettoyage. La formule de peinture utilisée est la suivante :

| Constituant | Origine | Masse (en g) |
|-------------|---------|--------------|
| Eau | - | 60.9 |
| (1)Natrosol 250 MR | AQUALON | 0.9 |
| (2) Calgon N | HOECHST | 0.54 |
| (3) PROXSAN TB 801 | PROTEX | 0.9 |
| (4) Coatex P 90 | COATEX | 1.8 |
| (5) AMMONIAQUE 22% | | 1.8 |
| (6) NOPCO 8034 | HENKEL | 1.8 |
| (7)TiO$_2$ TR 92 | TIOXYDE | 134.94 |
| (8) Durcal 5 | OMYA | 58.47 |
| (9) Durcal 10 | OMYA | 197.91 |

EP 0 740 691 B1

(suite)

| Constituant | Origine | Masse (en g) |
|---|---|---|
| (10) Latex | | 482.46 |
| (11) BDG | | 4.5 |
| (12) NOPCO DSX 1514 | HENKEL | 2.16 |
| (13) Eau | | 50.92 |
| Total | | 1000 |

Trois séries de tests ont été réalisées sous forme d'un plan d'expérience, mettant sous contrôle les pourcentages de DCPOEMA, de photoamorceur et de diméthyléthanolamine (DMEA) dans la peinture formulée, ce dernier paramètre pour explorer la contribution d'une amine à la formule comme il est d'usage dans les compositions classiques de système photoréticulables. Elles sont résumées ci-après.

| | DCPOEMA dans le latex | Photo-amorceur | DMEA | type de traitement |
|---|---|---|---|---|
| Série 1 | 1% à 5% | BPQ 0.5% à 4% | 1% à 4% | QUV 4h + hum. 4h |
| Série 2 | 1% à 5% | BPQ 0% à 5% | 0% à 5% | Soleil une journée |
| Série 3 | 1% à 5% | QTX 0% à 5% | 0% à 5% | Soleil une journée |

Sept triplets de valeurs ont été retenus pour chaque paramètre exploré pour les paramètres suivants : % de DCPOEMA dans le latex, % de photoamorceur et % de DMEA dans la peinture finale; trois triplets complémentaires permettent de vérifier la validité du test.

Ces sept triplets se placent sur un diagramme ternaire comme représenté sur la figure 13, où les valeurs paramétrées X1, X2 et X3 peuvent prendre toutes les valeurs de 0 à 1, avec cependant la restriction suivante : X1 + X2 + X3 = 1. Ces 3 paramètres prennent des valeurs très précises dans le cas des 7 expériences à réaliser. Les triplets 8 à 10 permettent d'affiner les résultats.

| Réponse du test (L,a,b) | X1 | X2 | X3 |
|---|---|---|---|
| Y1 | 1 | 0 | 0 |
| Y2 | 0 | 1 | 0 |
| Y3 | 0 | 0 | 1 |
| Y4 | 1/2 | 1/2 | 0 |
| Y5 | 1/2 | 0 | 1/2 |
| Y6 | 0 | 1/2 | 1/2 |
| Y7 | 1/3 | 1/3 | 1/3 |
| Y8 | 2/3 | 1/6 | 1/6 |
| Y9 | 1/6 | 2/3 | 1/6 |
| Y10 | 1/6 | 1/6 | 2/3 |

9

| Série 1 : Photoamorceur = BPQ. Type de traitement : QUV (4 h d'UV à 313 nm et 4 h d'humidité). | | | | | |
|---|---|---|---|---|---|
| réponse | % DCPOEMA | % BPQ | % DMEA | L après | dL |
| Y1 | 5 | 0.5 | 1 | 89.78 | -3.17 |
| Y2 | 1 | 4 | 1 | 90.95 | -1.97 |
| Y3 | 1 | 0.5 | 4 | 87.82 | -5.10 |
| Y4 | 3 | 2.25 | 1 | 88.69 | -4.29 |
| Y5 | 3 | 0.5 | 2.5 | 88.72 | -4.15 |
| Y6 | 1 | 2.25 | 2.5 | 89.77 | -3.23 |
| Y7 | 2.33 | 1.67 | 2 | 89.21 | -3.69 |
| Y8 | 3.67 | 1.08 | 1.5 | 90.83 | -1.97 |
| Y9 | 1.67 | 2.83 | 1.5 | 90.25 | -2.74 |
| Y10 | 1.67 | 1.08 | 3 | 88.32 | -4.67 |

| Série 2 : Photoamorceur = BPQ. Type de traitement : soleil une journée. | | | | | |
|---|---|---|---|---|---|
| réponse | % DCPOEMA | % BPQ | % DMEA | L après | dL |
| Y1 | 5 | 0 | 0 | 91.78 | -2.66 |
| Y2 | 1 | 5 | 0 | 92.42 | -1.47 |
| Y3 | 1 | 0 | 5 | 85.50 | -9.40 |
| Y4 | 3 | 2.5 | 0 | 93.23 | -1.19 |
| Y5 | 3 | 0 | 2.5 | 90.96 | -3.11 |
| Y6 | 1 | 2.5 | 2.5 | 91.31 | -2.65 |
| Y7 | 2.33 | 1.67 | 1.67 | 91.91 | -2.18 |
| Y8 | 3.67 | 0.83 | 0.83 | 92.02 | -1.64 |
| Y9 | 1.67 | 3.33 | 0.83 | 93.04 | -1.56 |
| Y10 | 1.67 | 0.83 | 3.33 | 90.56 | -2.22 |

| Série 3 : Photoamorceur = QTX. Type de traitement : soleil une journée. | | | | | |
|---|---|---|---|---|---|
| réponse | % DCPOEMA | % QTX | % DMEA | L après | dL |
| Y1 | 5 | 0 | 0 | 94.39 | -1.80 |
| Y2 | 1 | 5 | 0 | 85.18 | -5.54 |
| Y3 | 1 | 0 | 5 | 90.94 | -2.33 |
| Y4 | 3 | 2.5 | 0 | 89.95 | -3.16 |
| Y5 | 3 | 0 | 2.5 | 89.74 | -4.08 |
| Y6 | 1 | 2.5 | 2.5 | 86.99 | -5.90 |
| Y7 | 2.33 | 1.67 | 1.67 | 87.43 | -5.23 |
| Y8 | 3.67 | 0.83 | 0.83 | 90.16 | -3.21 |
| Y9 | 1.67 | 3.33 | 0.83 | 87.57 | -5.38 |
| Y10 | 1.67 | 0.83 | 3.33 | 87.52 | -4.84 |

On remarque deux formulations qui ont une luminance après salissure supérieure à toutes les autres peintures

| % DCPOEMA dans le latex | % mass. BPQ | % mass. DMEA | L |
|---|---|---|---|
| 3% | 2.5% | 0% | 93.23 |
| 1.7% | 3.3% | 0.8% | 93.04 |

qui permettent de conclure que l'absence d'amine libre ne porte pas préjudice aux performances de photoréticulation en surface et qu'il est inutile d'utiliser des taux de DCPOEMA trop élevés.

Exemple 6 (Application peinture)

La nouvelle formulation de peinture est indiquée ci-dessous

| Constituant | Origine | Masse (en g) |
|---|---|---|
| Eau | - | 142.00 |
| (1) Natrosol 250 HBR ou Viscoatex 46 | AQUALON ou COATEX | 0.50 ou 1.60 |
| (2) Calgon N | HOECHST | 0.55 |
| (4) Coatex P 90 | COATEX | 1.90 |
| (5) $NH_3$ | PROLABO | 1.70 |
| (7) $TiO_2$ TR 92 | TIOXYDE | 129.10 |
| (8) Durcal 5 | OMYA | 56.00 |
| (9) Durcal 10 | OMYA | 189.40 |
| (10) Latex | | 470.00 |
| (11) BDGA | BP CHEMICALS | 4.55 |
| (6) Dehydran 1620 | SIDOBRE SINNO | 1.50 |
| (12) SER AD FX 1010 | SERVO DELDEN | 1.30 |

Les latex utilisés retenus ici sont les latex A, B, C, respectivement à 0, 1 et 2% de DCPOEMA, avec lesquels sont formulées des peintures avec de l'ABQ comme photoinitiateur à différents pourcentages. L'ABQ a été préalablement à son addition dissous dans le minimum d'eau distillée (3.1 g d'ABQ dans 2.5 g d'eau). Pour permettre les changements de la formulation de peinture sans poser de problème d'adaptation (variation de l'extrait sec en particulier), les dosages d'ABQ sont exprimés en pourcentages massiques d'ABQ sur le latex humide, et non plus sur la peinture finale.

Les points retenus se placent comme indiqué sur le diagramme d'expériences de la figure 14.

Après formulation, les peintures rendues photoréticulables en surface ont été étalées sur plaques d'acier inox sur une épaisseur de 200 µm. Les revêtements ont alors subi divers tests photochimiques.

1) Un passage au QUV (4 heures d'UV + 4 heures de condensation), ou
2) Un séchage de 6 jours (à 23 °C et 50 % d'humidité relative) suivi de 3 jours d'exposition aux UV solaires, ou
3) Une exposition de 15 jours aux UV solaires, ou
4) 2 mois d'exposition à la lumière solaire.

Pour chaque formulation photosensible (13 au total), les plaques ont été soumises à un de ces quatre traitements photochimiques. Les plaques ont alors été salies artificiellement à l'aide du slurry, puis lavées.

Les mesures de luminances ont été effectuées après application des peintures sur acier inox, après exposition aux UV et après nettoyage du slurry. Les résultats présentés sont ceux qui sont issus de dL entre la mesure de L après application des peintures et la mesure de L après nettoyage du slurry. Le tableau suivant rassemble les valeurs des coefficients b, particulièrement les coefficients b1 (effet du % de DCPOEMA dans le latex), b2 (effet du % d'ABQ dans la formulation) et b12 (effet d'interaction entre ces deux paramètres) .

|  | QUV | | soleil 3 jours | | soleil 15 jours | | soleil 2 mois | |
|---|---|---|---|---|---|---|---|---|
|  | cell. | acryl. | cell. | acryl. | cell. | acryl. | cell. | acryl. |
| b0 | -0.5 | -0.5 | -4.7 | -3.7 | -4.7 | -1.8 | -1.0 | -3.7 |
| b1 | 3.8 | 3.7 | 3.2 | -0.4 | 3.2 | 2.7 | 2.7 | -0.4 |
| b2 | 1.2 | 1.2 | 3.1 | 3.3 | 3.1 | 3.6 | 1.9 | 3.3 |
| b11 | -1.6 | -1.6 | -2.7 | -0.1 | -2.7 | 0.1 | -0.6 | -0.1 |
| b22 | -4.0 | -4.0 | -4.0 | -6.7 | -4.0 | -6.5 | -4.0 | -6.7 |
| b12 | -1.3 | -1.3 | -5.0 | -0.7 | -5.0 | -0.6 | -2.8 | -0.7 |

Ces valeurs permettent d'interpoler les valeurs de dL mesurées selon la formule

$Y = dL = b0 + b1.X_1 + b2.X_2 + b11.X_1^2 + b22 X_2^2 + b12.X_1.X_2$ où $X_1$ et $X_2$ varient de 0 à 1 sous la condition $X_1 + X_2 = 1$. La valeur de dL est toujours négative car la luminance diminue lorsque les plaques ont été salies par le slurry. Plus la valeur de dL sera proche de 0 (luminances voisines avant et après salissure), plus la formulation sera efficace contre l'encrassement. Les effets bl et b2 sont positifs, traduisant les influences positives du taux croissant de photoamorceur ABQ et du pourcentage croissant de DCPOEMA dans le latex.

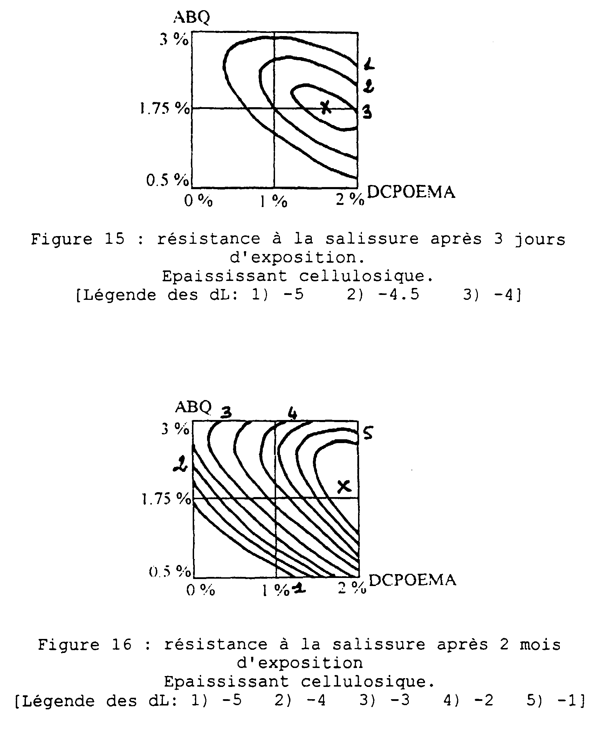

Les courbes d'isoréponses de dL après des durées d'exposition à la lumière naturelle durant 3 jours et 2 mois des formulations avec épaississant cellulosique ou acrylique (fig.15 à 18) ont même allure générale. Les formulations idéales y sont marquées par une croix.

a) Formules à épaississant cellulosique:

Après 3 jours d'exposition (fig.15), la valeur maximale atteinte pour dL est -4. Après 2 mois au soleil (fig.16), cette valeur monte à -0.5. On note donc une très nette amélioration de la performance de résistance à la salissure entre ces deux périodes.

b) Formules à épaississant acrylique.

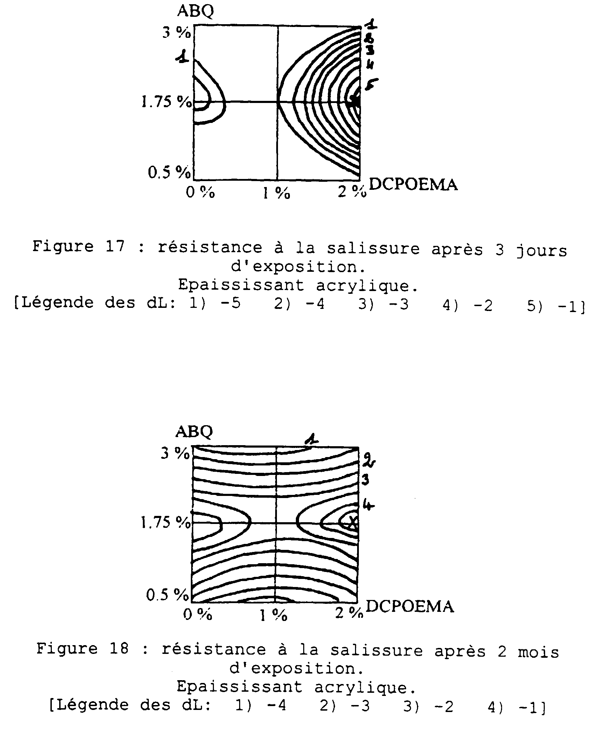

Après 3 jours d'exposition aux UV solaires (fig. 17), on atteint déjà une valeur maximale de dL de -0.5. Après 2 mois d'exposition (fig. 18), ces performances n'ont plus sensiblement évolué.

Ces résultats orientent vers des compositions de peinture photoréticulable à bonne résistance à l'encrassement comportant un taux de photoamorceur ABQ d'environ 1.75 % massiques sur latex humide titrant lui-même 1.5 à 2 % massiques de DCPOEMA sur sa partie organique, la préférence allant à une composition à épaississant acrylique.

POSSIBILITES D'APPLICATION INDUSTRIELLE :

L'invention s'applique à la fabrication de compositions photodurcissables pour la réalisation, par exemple, d'encres, d'adhésifs, de produits pour l'impression pigmentaire des textiles ou pour le finissage du cuir, et surtout de vernis et de peintures.

**Revendications**

1. Compositions de latex de copolymères de composés α, β -insaturés et de méthacrylate de dicyclopenténýl-oxyéthyle (DCPOEMA), caractérisés en ce qu'elles contiennent un photoamorceur.

2. Compositions selon la revendication 1, caractérisées en ce que la teneur en DCPOEMA exprimée en pourcentage pondéral par rapport à l'ensemble des copolymères est compris entre 0,01 et 50%.

3. Compositions selon la revendication 1, caractérisées en ce que la teneur en photoamorceur exprimée en pourcentage pondéral par rapport au latex humide est compris entre 0,01 et 5%.

4. Compositions selon l'une ou l'autre des revendications 1 à 3, caractérisées en ce que le photoamorceur est un dérivé ammonium quaternaire de la benzophénone ou de la thioxanthone.

5. Compositions selon la revendication 4, caractérisées en ce que le photoamorceur est pris dans le groupe constitué par le chlorure de (4-benzoylbenzyl)triméthylammonium, le chlorure de 2-hydroxy-3-(4-benzoyl-phénoxy) -N,N,N-triméthyl-1-propanaminium monohydrate, le chlorure de 2-hydroxy-3-(3,4-diméthyl-9-oxo-9H-thioxanthène-2-yloxy-N,N,N-triméthylpropanaminium, le bromure de (2-acryloxyoxyéthyl)-(4-benzoylbenzyl) -diméthylammonium.

6. Compositions selon l'une ou l'autre des revendications 1 à 3, caractérisesé en ce que le photoamorceur est la benzophénone ou un de ses dérivés organosolubles ou la thioxanthone.

7. Compositions selon la revendication 6, caractérisées en ce que le photoamorceur est le 1-(2-éthylhexyloxy) -2-(acétoxy)-3-(2-benzoylbenzoyloxy) -propane.

8. Compositions selon l'une ou d'autre des revendications 1 à 3, caractérisées en ce que le photoamorceur est un dérivé organosoluble de phénylpropanone.

9. compositions selon la revendication 8, caractérisées en ce que le photoamorceur est pris dans le groupe constitué par la 2-hydroxy-2-méthyl-1-phénylpropane-1-one et la 2-méthyl -1-[4- (méthylthio) phényl]-2-morpholino-propanone-1.

10. Compositions selon la revendication 8, caractérisées en ce que le photoamorceur est un oligomère de la 2-hydroxy-2-méthyl-1-[(4-isopropényl)-phénylpropane-1-one.

11. Procédé pour rendre photosensible un film de copolymère obtenu par coalescence d'un latex de copolymère de DCPOEMA, caractérisé en ce qu'on ajoute un photoamorceur au latex tel qu'obtenu par polymérisation en émulsion.

12. Procédé selon la revendication 11, caractérisé en ce que l'on ajoute dans le latex un photoamorceur ou une solution d'un photoamorceur tel que cité dans l'une quelconque des revendications 4 à 9.

13. Application de l'une ou l'autre des revendications 1 à 12 à la fabrication de peintures, de vernis, d'encres, d'adhésifs, produits pour l'impression pigmentaire des textiles ou le finissage du cuir, toutes compositions ainsi rendues photodurcissables.

**Patentansprüche**

1. Latexzusamnlensetzungen von Copolymeren aus $\alpha,\beta$-ungesättigten Verbindungen und Dicyclopentenyloxyethylmethacrylat (DCPOEAMA), dadurch gekennzeichnet, daß sie einen Photostarter enthalten.

2. Zusammensetzungen nach Anspruch 1, dadurch gekennzeichnet, daß der DCPOEMA-Gehalt, berechnet in Gewichtsprozent in bezug auf die Gesamtheit der Copolymere, zwischen 0,01 und 50 % liegt.

3. Zusammensetzungen nach Anspruch 1, dadurch gekennzeichnet, daß der Gehalt an Photostarter, berechnet in Gewichtsprozent in bezug auf den feuchten Latex, zwischen 0,01 und 5 % liegt.

4. Zusammensetzungen nach einem der Ansprüche 1 bis 3, dadurch gekennzeichnet, daß der Photostarter ein quaternäres Ammoniumderivat des Benzophenons oder des Thioxanthons ist.

5. Zusammensetzungen nach Anspruch 4, dadurch gekennzeichnet, daß der Photostarter ausgewählt ist aus der Gruppe von (4-Benzoylbenzyl)-trimethyl-ammoniumchlorid, 2-Hydroxy-3-(4-benzoylphenoxy)-N,N,N-trimethylpropan-aminiumchloridmonohydrat, 2-Hydroxy-3-(3,4-dimethyl-9-oxo-9H-thioxanthen-2-yloxy)-N,N,N-trimethylpropanaminiumchlorid und (2-Acryloxyoxyethyl)-(4-benzoylbenzyl)-dimetliylammoniumbromid.

6. Zusammensetzungen nach einem der Ansprüche 1 bis 3, dadurch gekennzeichnet, daß der Photostarter Benzophenon oder eines seiner in organischen Lösungsmitteln löslichen Derivate oder Thioxanthon ist.

7. Zusammensetzungen nach Anspruch 6, dadurch gekennzeichnet, daß der Photostarter 1-(2-Ethylhexyloxy)-2-(acetoxy)-3-(2-benzoyllbenzoyloxy)-propan ist.

8. Zusammensetzungen nach einem der Ansprüche 1 bis 3, dadurch gekennzeichnet, daß der Photostarter ein in organischen Lösungsmitteln lösliches Derivat des Phenylpropanons ist.

9. Zusammensetzungen nach Anspruch 8, dadurch gekennzeichnet, daß der Photostarter ausgewählt ist aus der Gruppe von 2-Hydroxy-2-methyl-1-phenylpropan-1-on und 2-Methyl-1-[4-(methylthio)phenyl]-2-morpholino-1-propanon.

10. Zusammensetzungen nach Anspruch 8, dadurch gekennzeichnet, daß der Photostarter ein Oligomer des 2-Hydroxy-2-methyl-1-[(4-isopropenyl)]-phenylpropan-1-ons ist.

11. Verfahren, um einen Copolymerfilm, der durch Koaleszenz eines DCPOEMA- Copolymerlatex erhalten ist, lichtempfindlich zu machen, dadurch gekennzeichnet, daß man dem beispielsweise durch Emulsionspolymerisation erhaltenen Latex einen Photostarter zusetzt.

12. Verfahren nach Anspruch 11, dadurch gekennzeichnet, daß man dem Latex einen Photostarter oder eine Lösung eines Photostarters, wie in einem der Ansprüche 4 bis 9 genannt, zusetzt.

13. Anwendung einer der Ansprüche 1 bis 12 zur Herstellung von Farben, Lacken, Druckfarben, Klebstoffen, Produkten zum Pigmentdruck von Textilien oder zur Lederzurichtung oder allen auf diese Weise photohärtbar gemachten Zusammensetzungen.

## Claims

1. Latex compositions of copolymers of $\alpha$, $\beta$-unsaturated compounds and dicyclopentenyloxyethyl methacrylate (DCPOEMA), characterized in that they contain a photoinitiator.

2. Compositions according to Claim 1, characterized in that the content of DCPOEMA, expressed as a percentage by weight relative to the total amount of copolymers, is between 0.01 and 50%.

3. Compositions according to Claim 1, characterized in that the content of photoinitiator, expressed as a percentage by weight relative to the wet latex, is between 0.01 and 5%.

4. Compositions according to any one of Claims 1 to 3, characterized in that the photoinitiator is a quaternary ammonium derivative of benzophenone or of thioxanthone.

5. Compositions according to Claim 4, characterized in that the photoinitiator is taken from the group consisting of (4-benzoylbenzyl) trimethylammonium chloride, 2-hydroxy-3-(4-benzoylphenoxy)-N, N,N-trimethyl-1-propanaminium chloride monohydrate, 2-hydroxy-3-(3,4-dimethyl-9-oxo-9H-thioxanthen-2-yloxy) -N, N, N-trimethyl-propanaminium chloride and (2-acryloyloxyethyl)-(4-benzoylbenzyl) dimethylammonium bromide.

6. Compositions according to any one of Claims 1 to 3, characterized in that the photoinitiator is benzophenone or one of its derivatives which is soluble in organic solvents, or is thioxanthone.

7. Compositions according to Claim 6, characterized in that the photoinitiator is 1-(2-ethylhexyloxy)-2-lacetoxy)-3-(2-benzoylbonzoyloxy) propane.

8. Compositions according to any one of Claims 1 to 3, characterized in that the photoinitiator is a phenyl-propanone derivative which is soluble in organic solvents.

9. Compositions according to Claim 8, characterized in that the photoinitiator is taken from the group consisting of 2-hydroxy-2-methyl-1-phenylpropan-1-one and 2-methyl-1-[4-(methylthio) phenyl]-2 -morpholino-1-propanone.

10. Compositions according to Claim 8, characterized in that the photoinitiator is an oligomer of 2-hydroxy-2-methyl-1-[(4-isopropenyl) phenyl] propan-1-one.

11. Method of photosensitizing a copolymer film obtained by coalescence of a DCPOEMA copolymer latex, characterized in that a photoinititor is added to the latex as obtained by emulsion polymerization.

**12.** Method according to Claim 11, characterized in that a photoinitiator or a solution of a photoinitiator as set forth in any one of Claims 4 to 9 is added to the latex.

**13.** Application of any one of Claims 1 to 12 to the production of paints, varnishes, inks, adhesives, products for the pigmentary printing of textiles or the finishing of leather, and all compositions rendered photocurable in this way.

Figure 1
Méthacrylate de dicyclopentén256-oxyéthyle ou DCPOEMA

Figure 2
Chlorure de (4-benzoylbenzyl)triméthylammonium

Figure 3
Chlorure de 2-hydroxy-3-(4-benzoylphénoxy)-N,N,N-triméthyl-
1-propanaminium monohydrate

Figure 4
Chlorure de 2-hydroxy-3-(3,4-diméthyl-9-oxo-
9H-thioxanthène-2-yloxy-N,N,N-triméthylpropanaminium

Figure 5
Bromure de (2-acryloxyoxyéthyl)(4-benzoylbenzyl)-
diméthylammonium

Figure 6
Esakure Kip Water Emulsion (Fratelli Lamberti)

Figure 7
1-(2-éthylhexyloxy)-2-(acétoxy)-
-3-(2-benzoylbenzoyloxy)-propane

Figure 8
2-hydroxy-2-méthyl-1-phénylpropane-1-one

Figure 9
2-méthyl -1-[4-(méthylthio)phényl]-
-2-morpholino-propanone-1

Figure 10
Méthacrylate de méthyle (MAM)

Figure 11
Acrylate de butyle (ABu)

Figure 12

Figure 13
Diagramme du test de l'exemple 5

Figure 14
Diagramme du test de l'exemple 6

Figure 15 : résistance à la salissure après 3 jours
d'exposition.
Epaississant cellulosique.
[Légende des dL: 1) -5    2) -4.5    3) -4]

Figure 16 : résistance à la salissure après 2 mois
d'exposition
Epaississant cellulosique.
[Légende des dL: 1) -5    2) -4    3) -3    4) -2    5) -1]

Figure 17 : résistance à la salissure après 3 jours
d'exposition.
Epaississant acrylique.
[Légende des dL: 1) -5    2) -4    3) -3    4) -2    5) -1]

Figure 18 : résistance à la salissure après 2 mois
d'exposition.
Epaississant acrylique.
[Légende des dL:  1) -4    2) -3    3) -2    4) -1]